# EUROPEAN PATENT APPLICATION

(11) **EP 3 219 379 A1**
(43) Date of publication of application: **20.09.2017**
(21) Application number: 16186692.6
(22) Date of filing: 31.08.2016
(51) Int. Cl.: B01D 53/02, B01D 53/14

(54) **CARBONIC ACID GAS ABSORBING MATERIAL, CARBONIC ACID GAS RECOVERY SYSTEM AND CARBONIC ACID GAS RECOVERY METHOD**

(30) Priority: 16.03.2016 JP 2016053110
(71) Applicant: Kabushiki Kaisha Toshiba, Tokyo 105-8001 (JP)
(72) Inventor: WATANDO, Hiroko, Tokyo, 105-8001 (JP); KUBOKI, Takashi, Tokyo, 105-8001 (JP); KONDO, Asato, Tokyo, 105-8001 (JP); UDATSU, Mitsuru, Tokyo, 105-8001 (JP)
(74) Representative: Moreland, David

(57) **Abstract**

A carbonic acid gas absorbing material on an embodiment includes a liquid carbonic acid gas absorbent and a solid carbonic acid gas absorbent. The liquid carbonic acid gas absorbent is a solution containing a first amine and a solvent. The solid carbonic acid gas absorbent is a second amine of any one among a polyamine, a base material and an amine fixed to the base material, or a polyamine, a base material, and an amine fixed to the base material.

## Description

### CROSS-REFERENCE TO RELATED APPLICATION

This application is based upon and claims the benefit of priority from Japanese Patent Application No. 2016-53110, filed on MARCH 16, 2016; the entire contents of which are incorporated herein by reference.

### FIELD

The present disclosure relates to a carbonic acid gas absorbing material, a carbonic acid gas recovery system, and a carbonic acid gas recovery method. In particular, but without limitation, this disclosure relates to a carbonic acid gas absorbing material, a carbonic acid gas recovery system, and a carbonic acid gas recovery method.

### BACKGROUND

In recent years, it has been required to decrease the amount of carbon dioxide emissions into the atmosphere in order to suppress global warming. In particular, the amount of carbon dioxide (CO₂) emissions caused by coal fired power generation accounts for nearly 30% of the amount of CO₂ emissions in the whole world, and thus a great effect as a global warming mitigation measure may be expected by decreasing the amount of carbon dioxide emissions caused by coal fired power generation. There is a technology by a recovery method utilizing chemisorption as one of the technologies to separate, recover, and store carbon dioxide (Carbon Capture and Storage) (hereinafter, referred to as "CCS" in some cases in this specification), and it plays an important role in decreasing the amount of carbon dioxide in the boiler combustion exhaust gas of a thermal power plant or the like.

The following ones may be mentioned as a representative CCS technology. The combustion exhaust gas from the boiler is subjected to the treatments such as denitrification, dust collection, and desulfurization if necessary, then led to the absorption tower, and brought into contact with the absorbing liquid in the absorption tower. By this, CO₂ in the combustion exhaust gas is absorbed into the absorbing liquid so as to be removed from the combustion exhaust gas. This absorbing liquid which has absorbed CO₂ is heated by, for example, a heat exchanger or the like and then led to the regeneration tower, and CO₂ is dissociated from the absorbing liquid in the regeneration tower so as to be recovered. Meanwhile, the absorption liquid from which CO₂ has been dissociated in the regeneration tower is circulated to the aforementioned absorption tower and reused for absorbing CO₂ in the combustion exhaust gas. As the absorbing liquid to be used in such a CCS technology, an absorbing liquid containing an amine and water is often investigated.

However, a great quantity of energy is required in order to heat the entire amount of absorbing liquid to 100°C or higher when releasing CO₂, and thus there are problems in terms of CO₂ recovery efficiency and profitability. In addition, it is required to regularly remove the impurities or exchange the absorbing liquid in the case of an amine aqueous solution since degradation products such as amine derivatives, organic acids, and amino acids are produced in a great amount to cause a decrease in efficiency as it is used for an extended period of time.

### DETAILED DESCRIPTION

A carbonic acid gas absorbing material on an embodiment includes a liquid carbonic acid gas absorbent and a solid carbonic acid gas absorbent. The liquid carbonic acid gas absorbent is a solution containing a first amine and a solvent. The solid carbonic acid gas absorbent is a second amine of any one among a polyamine, a base material and an amine fixed to the base material, or a polyamine, a base material, and an amine fixed to the base material.

Embodiments relate to a carbonic acid gas absorbing material, a carbonic acid gas recovery system, and a carbonic acid gas recovery method to recover a carbonic acid gas and the like in the exhaust gas generated in an energy plant or chemical plant such as a coal fired power plant which utilizes a raw material or fuel containing a hydrocarbon as a main component, the exhaust gas generated in a motor vehicle and the like, a raw material gas, or a fuel gas.

Hereinafter, the contents of the present disclosure will be described in detail.

### (Carbonic acid gas absorbent)

The carbonic acid gas absorbing material in embodiments contains a liquid carbonic acid gas absorbent and a solid carbonic acid gas absorbent. The liquid carbonic acid gas absorbent contains a liquid first amine. The solid carbonic acid gas absorbent contains a second amine containing a base material and an amine fixed to the base material. It is preferable that the liquid carbonic acid gas absorbent and the solid carbonic acid gas absorbent be a mixture. In addition, a carbonic acid gas absorbing material consisting of a mixture of the liquid carbonic acid gas absorbent with the solid carbonic acid gas absorbent is more preferable.

The liquid carbonic acid gas absorbent contains a liquid first amine. The liquid carbonic acid gas absorbent is preferably a solution containing the first amine and a solvent. Here, the term "to be liquid" means to be a liquid at 20°C and 1 atm. It is preferable that the first amine contain any kind of liquid amine of an aliphatic amine, a heterocyclic amine, or both an aliphatic amine, and a heterocyclic amine, and it is more preferable that the first amine be composed of any kind of liquid amine of an aliphatic amine and a heterocyclic amine, or mixture of an aliphatic amine and a heterocyclic amine. It is preferable to contain at least water in the solvent of the first amine. The amine contained in the first amine may be one or more kinds of amines. The amine contained in the first amine is dissolved in water. As the solvent, water and a solvent compatible with water are preferable.

The first amine preferably has at least one kind selected from the group consisting of; a primary amine, a secondary amine, or a tertiary amine from the viewpoint of decreasing the energy required at the time of carbonic acid gas desorption. The first amine is preferably a hindered amine. When the first amine is the primary amine, the secondary amine, or the primary amine and the secondary amine, it is more preferable that any of the primary amine, the secondary amine, or the primary amine and the secondary amine be a hindered amine among the first amines. The term "hindered amine" refers to a compound in which at least one functional group among the functional groups (for example, a carbon chain) bonded to nitrogen of an amine is a carbon chain and the carbon chain is branched.

The primary amine of the first amine may have plural kinds of amine structures. The secondary amine of the first amine may have plural kinds of amine structures. The tertiary amine of the first amine may have plural kinds of amine structures. The plural kinds of amine structures used herein include both of one having plural kinds of amine structures in one kind of amine and a mixture of plural kinds of amine compounds.

The aliphatic amine and heterocyclic amine contained in the first amine is represented by a chemical formula, R1R2-N-R3. R1, R2, and R3 are all bonded to the nitrogen atom. Incidentally, R2 and R3 are bonded to each other to form a cyclic amine containing nitrogen in the case of a heterocyclic amine.

R1 contains at least hydrogen (H) and may contain carbon (C). R1 may further contain oxygen (O), nitrogen (N), or oxygen (O) and nitrogen (N). R1 is hydrogen or a functional group represented by a chemical formula, Cₛ₁Hₜ₁Oᵤ₁Nᵥ₁. It is preferable that s1, t1, u1, and v1 respectively satisfy 0 ≤ s1 ≤ 20, 1 ≤ t1 ≤ 50, 0 ≤ u1 ≤ 10, and 0 ≤ v1 ≤ 5. It is not preferable that R1 have a too large molecular structure since the hydration of amine decreases and the viscosity increases. Hence, an amine which satisfies the above conditions is preferable. For these reasons, it is more preferable that s1, t1, u1, and v1 respectively satisfy 0 ≤ s1 ≤ 10, 1 ≤ t1 ≤ 25, 0 ≤ u1 ≤ 5, and 0 ≤ v1 ≤ 4.

R2 contains at least hydrogen (H) and may contain carbon (C). R2 may further contain oxygen (O), nitrogen (N), or oxygen (O) and nitrogen (N). R2 is hydrogen or a functional group represented by a chemical formula, Cₛ₂Hₜ₂Oᵤ₂Nᵥ₂. It is preferable that s2, t2, u2, and v2 respectively satisfy 0 ≤ s2 ≤ 20, 1 ≤ t2 ≤ 50, 0 ≤ u2 ≤ 10, and 0 ≤ v2 ≤ 5. It is not preferable that R2 have a too large molecular structure since the hydration of amine decreases and the viscosity increases. Hence, an amine which satisfies the above conditions is preferable. For these reasons, it is more preferable that s2, t2, u2, and v2 respectively satisfy 0 ≤ s2 ≤ 20, 1 ≤ t2 ≤ 25, 0 ≤ u2 ≤ 5, and 0 ≤ v2 ≤ 4.

R3 contains at least hydrogen (H) and carbon (C). R3 may further contain oxygen (O), nitrogen (N), or oxygen (O) and nitrogen (N). R3 is hydrogen or a functional group represented by a chemical formula, Cₛ₃Hₜ₃Oᵤ₃Nᵥ₃. It is preferable that s3, t3, u3, and v3 respectively satisfy 1 ≤ s3 ≤ 20, 1 ≤ t3 ≤ 50, 0 ≤ u3 ≤ 10, and 0 ≤ v3 ≤ 5. It is not preferable that R3 have a too large molecular structure since the hydration of amine decreases and the viscosity increases. Hence, an amine which satisfies the above conditions is preferable. For these reasons, it is more preferable that s3, t3, u3, and v3 respectively satisfy 1 ≤ s3 ≤ 10, 1 ≤ t3 ≤ 25, 0 ≤ u3 ≤ 5, and 0 ≤ v3 ≤ 4.

Specific examples of the first amine may include the following compounds. One or more kinds of amines selected from the group consisting of monoethanolamine, 2-amino-1-propanol, 3-amino-1-propanol, 1-amino-2-propanol, 2-amino-1-butanol, 3-amino-1-butanol, 4-amino-1- butanol, 2-amino-2-methyl-1-propanol, 2-amino-2-ethyl-1-propanol, ethylenediamine, propylenediamine, 1-propylamine, 2-propylamine, 2-methylaminoethanol, 2-ethylaminoethanol, diethanolamine, hydroxyethylhydroxypropylamine, dipropanolamine, isopropylaminoethanol, 3-methyl-amine-1,2-propanediol, diethylamine, methylethylamine, dipropylamine, cyclopentylaminoethanol, cyclohexylaminoethanol, dimethylaminoethanol, diethylaminoethanol, N-methyldiethanolamine, triethanolamine, 3-(dimethylamino)-1,2-propanediol, 2-{[2-(dimethylamino)ethyl]methylamino}ethanol, N,N,N',N'-tetramethylethylenediamine, N-methyl-cyclohexylaminoethanolpiperidine, piperazine, 1-methylpiperazine, 2-methylpiperazine, 1,4-dimethylpiperazine, pyrrolidine, 1-methylpyrrolidine, 2-methylpyrrolidine, 1,4-diazabicyclo[2,2,2]octane, and morpholine are preferable as the first amine.

Specific examples of the primary amine, secondary amine, and tertiary amine may include the following compounds. It is preferable that one or more kinds of amines selected from the group consisting of 2-amino-2-methyl-1-propanol, isopropylaminoethanol, N-t-butylaminoethanol, cyclohexylaminoethanol, cyclopentylaminoethanol, dimethylaminoethanol, diethylaminoethanol, N-methyldiethanolamine, triethanolamine, N-methylcyclopentylaminoethanol, N-ethylcyclopentylaminoethanol, 3-(dimethylamino)-1,2-propanediol, 2-{[2-(dimethylamino)ethyl]methylamino}ethanol, N,N,N',N'-tetramethylethylenediamine and N-methylcyclohexylaminoethanol, and N-ethylcyclohexylaminoethanol be contained in the first amine of embodiments.

In addition, one or more kinds of amines selected from the group consisting of 2-amino-2-methyl-1-propanol, isopropylaminoethanol, N-t-butylaminoethanol, cyclohexylaminoethanol, cyclopentylaminoethanol, dimethylaminoethanol, diethylaminoethanol, N-methyldiethanolamine, triethanolamine and N-methylcyclopentylaminoethanol, N-ethylcyclopentylaminoethanol, N-methylcyclohexylaminoethanol, and N-ethylcyclohexylaminoethanol are more preferable from the viewpoint of viscosity, vapor pressure, and the like.

It is preferable that the total amount of amine contained in the liquid carbonic acid gas absorbent containing the first amine and a solvent be 20% by weight or more and 80% by weight or less. It is not preferable that the total amount of amine contained in the liquid carbonic acid gas absorbent be less than 20% by weight since sufficient carbon dioxide absorption performance is not obtained. In addition, this is because a sufficient effect is not obtained by a decrease in operability due to an increase in viscosity and a decrease in absorption performance in a case in which the total amount of amine contained in the liquid carbonic acid gas absorbent is more than 80% by weight. From the same point of view, it is more preferable that the total amount of amine contained in the liquid carbonic acid gas absorbent be 30% by weight or more and 70% by weight or less. Incidentally, the liquid carbonic acid gas absorbent does not include a gel absorbent. In the case of using a mixed absorbent of two or more kinds of amines with water, it is possible to conduct mixing of the amines in an arbitrary ratio within the above preferred range of amine concentration. The quantitative and qualitative analysis method of the total amine contained in the liquid carbonic acid gas absorbent is not particularly limited as long as the quantitative and qualitative analysis of amine is possible, but it is possible to conduct the quantitative and qualitative analysis of amine by HPLC (High Performance Liquid Chromatography), LC/MS (High Performance Liquid Chromatography/Mass Spectrometry), LC/MS/MS (High Performance Liquid Chromatography/Tandem Mass Spectrometry), LC/TOF-MS (High Performance Liquid Chromatography/Time-of-flight mass spectrometry), GC/MS (Gas Chromatography/Mass Spectrometry), GC/MS/MS (Gas Chromatography/Tandem Mass Spectrometry), GC/TOF-MS (Gas Chromatography/Time-of-flight mass spectrometry), IC (Ion Chromatography), IC/MS (Ion Chromatography/Mass Chromatography) 1H-NMR (1H Nuclear Magnetic Resonance), and 13C-NMR (13C Nuclear Magnetic Resonance).

The liquid carbonic acid gas absorbent may contain a third component such as a deterioration inhibitor, a defoaming agent, a viscosity modifier, and an antioxidant other than those described above.

The solid carbonic acid gas absorbent is a solid amine containing a second amine. The solid amine is preferably a second amine of any one among a polyamine, a base material and an amine fixed to the base material, or a polyamine, a base material, and an amine fixed to the base material. The term "to be solid" refers to the state of a material which does not melt or dissolve in the liquid carbonic acid gas absorbent in the process of absorbing a carbonic acid gas at 1 atm and 20°C or higher and 100°C or lower. The second amine preferably contains a primary amine, a secondary amine, or a primary amine and a secondary amine. The carbonic acid gas absorbing material of embodiments is preferable in that it is possible to efficiently absorb a carbonic acid gas and to release the carbonic acid gas with low energy by combining the liquid carbonic acid gas absorbent and solid carbonic acid gas absorbent described above. In addition, the solid carbonic acid gas absorbent in the present embodiment has a faster carbonic acid gas absorption rate than the liquid carbonic acid gas absorbent. Moreover, the solid carbonic acid gas absorbent is considered to continuously promote the CO₂ absorption by the liquid carbonic acid gas absorbent as a catalyst. Hence, according to the carbonic acid gas absorbing material of embodiments, it is possible not only to efficiently absorb carbonic acid gas but also to repeatedly absorb and release a carbonic acid gas by regenerating the liquid carbonic acid gas absorbent through heating. Namely, the carbonic acid gas absorbing material of embodiments is a suitable material for an apparatus which recovers a carbonic acid gas. Incidentally, it is preferable that the average particle size of the solid carbonic acid gas absorbent of embodiments be 10 µm or more from the viewpoint of operability at the time of the separation operation thereof from the liquid carbonic acid gas absorbent, or the like. In addition, the solid carbonic acid gas absorbent does not include a gel absorbent.

The primary amine of the second amine may have plural kinds of amine structures. The secondary amine of the second amine may have plural kinds of amine structures. The plural kinds of amine structures used herein include both cases in which the second amine has plural kinds of amine structures on one kind of carrier and the second amine is a mixture of plural kinds of amine compounds.

A polyamine is a polymer having an amine structure in the repeating unit, the terminal functional group, or the repeating unit and the terminal functional group. It is preferable that the amine structure included in the repeating unit, the terminal functional group, or the repeating unit and the terminal functional group include a primary amine or a secondary amine. It is preferable to include a primary amine or a secondary amine in the main chain or side chain of the repeating unit. The polyamine preferably has the following partial structure from the viewpoint of the reaction rate of absorption and release of carbonic acid gas.

In addition, it is preferable that the amine fixed to a base material be a primary amine or a secondary amine. It is preferable that the amine fixed to a base material have a common partial structure with the polyamine. It is preferable that the amine fixed to a base material have this partial structure in order to improve the reaction rate of absorption and release of carbonic acid gas. Incidentally, the method for introducing an amine is not particularly limited as long as it can introduce an amine having such a partial structure into a base material. As the amine fixed to a base material, an amine dendrimer is also preferable.

The partial structure belonging to the second amine is an aliphatic amine structure or heterocyclic amine structure represented by a chemical formula, R4-NH-R5. R4 and R5 are all bonded to a nitrogen atom. Incidentally, R4 and R5 are bonded to each other to form a cyclic amine containing nitrogen in the case of a heterocyclic amine. The partial structure belonging to the second amine may be one or more kinds. The second amine may have plural kinds of amine structures. R4 or R5 is bonded to a base material or a ligand bonded to the base material in a case in which the second amine is an amine fixed to a base material. The partial structure belonging to the second amine is preferably a heterocyclic amine structure.

R4 contains at least hydrogen (H) and may contain carbon (C). R4 may further contain oxygen (O), nitrogen (N), or oxygen (O) and nitrogen (N). R4 is hydrogen or a functional group represented by a chemical formula, Cₛ₄Hₜ₄Oᵤ₄Nᵥ₄. It is preferable that s4, t4, u4, and v4 respectively satisfy 0 ≤ s4 ≤ 20, 1 ≤ t4 ≤ 50, 0 ≤ u4 ≤ 10, and 0 ≤ v4 ≤ 5. It is not preferable that R4 have a too large molecular structure since there is a problem such as a decrease in operability. Hence, an amine which satisfies the above conditions is preferable. For these reasons, it is more preferable that s4, t4, u4, and v4 respectively satisfy 0 ≤ s4 < 10, 1 ≤ t4 ≤ 25, 0 ≤ u4 ≤ 5, and 0 ≤ v4 ≤ 4.

R5 contains at least hydrogen (H) and carbon (C). R5 may further contain oxygen (O), nitrogen (N), or oxygen (O) and nitrogen (N). R5 is a functional group represented by a chemical formula, Cₛ₅Hₜ₅Oᵤ₅Nᵥ₅. It is preferable that s5, t5, u5, and v5 respectively satisfy 1 ≤ s5 ≤ 20, 1 ≤ t5 ≤ 50, 0 ≤ u5 ≤ 10, and 0 ≤ v5 ≤ 5. It is not preferable that R5 have a too large molecular structure since the hydration of amine decreases and the viscosity increases. Hence, an amine which satisfies the above conditions is preferable. For these reasons, it is more preferable that s5, t5, u5, and v5 respectively satisfy 1 ≤ s5 ≤ 10, 1 ≤ t5 ≤ 25, 0 ≤ u5 ≤ 5, and 0 ≤ v5 ≤ 4.

It is preferable that the second amine of embodiments have one or more kinds of partial structures selected from the group consisting of - (CH₂)ₙ-NH₂, -(CH₂(CH₃))ₙ-NH₂, -(CH₂CH(CH₃))ₙ-NH₂, -(CH₂)ₙ-C₅H₈-NH₂, -(CH₂)ₙ-C₆H₁₀-NH₂, -(CH₂)ₙ-C₆H₄-NH₂, -CH[(CH₂)ₙNH₂]₂, - (NH-CH₂CH₂)ₙ-NH₂, -CH₂CH(CH₂OH)-NH₂, -CH₂CH(CH₂CH₂OH)-NH₂, -CH₂C(CH₃)(CH₂OH)-NH₂, -(CH₂)ₙ-NH-CH₃, -(CH₂)ₙ-NH-CH₂CH₃, -(CH₂)ₙ-NH-CH₂CH₂OH, -(CH₂)ₙ-NH-CH(CH₃)-CH₂OH, -CH-(CH₂CH₂)₂-NH, and -N-(CH₂CH₂)₂-NH from the viewpoint of improving the reaction rate of absorption and release of carnic acid gas.

It is more preferable that the second amine of embodiments have one or more kinds of partial structures selected from the group consisting of -(CH₂)ₙ-NH₂, - (CH₂)ₙ-C₅H₈-NH₂, - (CH₂)ₙ-C₆H₁₀-NH₂, -(CH₂)ₙ-C₆H₄-NH₂, - (NH-CH₂CH₂)ₙ-NH₂, -(CH₂)ₙ-NH-CH₃, -(CH₂)ₙ-NH-CH₂CH₃, - (CH₂)ₙ-NH-CH₂CH₂OH, -CH- (CH₂CH₂)₂-NH, and -N- (CH₂CH₂)₂-NH from the viewpoint of improving the reaction rate of absorption and release of carnic acid gas. It is even more preferable that the second amine of embodiments have a partial structure that is a heterocyclic amine structure of -CH-(CH₂CH₂)₂-NH or -N-(CH₂CH₂)₂-NH for the same reason described above. It is preferable that the terminal of the main chain of the second amine of embodiments be a primary amine from the viewpoint of the carbonic acid gas absorption efficiency.

In a case in which the second amine of embodiments has a dendrimer structure, it is preferable to include a primary amine, a secondary amine, or a primary amine and a secondary amine in the repeating structure of the dendrimer. A specific suitable dendrimer type second amine is preferably those having a structure which satisfies the following general formula (1).

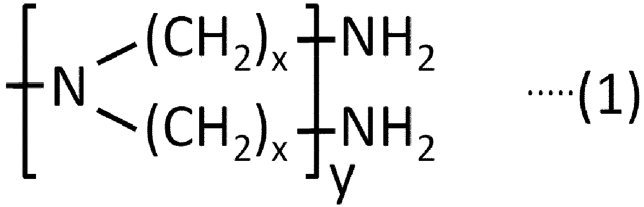

In the general formula (1), x is 1 or more and 5 or less and y is preferably 1 or more and 10 or less and y is more preferably 2 or more and 10 or less.

In the polyamine, it is preferable that n of the number of repeating unit satisfy 2 ≤ n ≤ 5000. It is not preferable that n is less than 2 since the amine dissolves. In addition, it is not preferable n is greater than 5000 since the operability decreases.

In the amine fixed to a base material, it is preferable that n of the number of repeating unit satisfy 1 ≤ 10. It is not preferable that n be greater than 10 since the reactivity of the amine with CO₂ decreases.

The base material may be any of an organic material, an inorganic material or a metal material, and it preferably has a functional group such as a halogen or a hydroxyl group which reacts with the precursor of the amine fixed to the base material. Specific examples of the base material may include a film, a porous body, gel, a resin material, and a filler material (stainless steel, iron, aluminum or copper, a plastic, and the like) . More specific examples of the base material may include porous silica or a porous resin, a resin film, and a metal filler.

Whether the second amine contains a primary amine or a secondary amine is determined by using an analytical method such as FT-IR (Fourier Transform Infrared Spectroscopy), solid state NMR, DART (Direct Analysis in Real Time), mass spectrometry using ASAP (Atmospheric Pressure Solid Analysis Probe). As a more specific analytical method, the fact that the second amine contains a primary amine or a secondary amine is confirmed by observing the peak attributed to H bonded to nitrogen in the primary amine and the secondary amine by 1H-NMR.

The solid carbonic acid gas absorbent may contain a third component other than those described above in order to improve the stability and wettability.

It is preferable to satisfy any one among the conditions that the concentration of nitrogen atom in the total weight of the solid carbonic acid gas absorbent is 0.1% by weight or more and 20% by weight or less, the ratio of nitrogen element in the liquid carbonic acid gas absorbent to that in the solid carbonic acid gas absorbent (the weight (g) of nitrogen element in the total weight of liquid carbonic acid gas absorbent: to the weight (g) of nitrogen element in the total weight of the solid carbonic acid gas absorbent) is from 100 : 1 to 2 : 1, and the concentration of nitrogen atom is 0.1% by weight or more and 20% by weight or less and the ratio of nitrogen element in the liquid carbonic acid gas absorbent to that in the solid carbonic acid gas absorbent (the weight (g) of nitrogen element in the total weight of liquid carbonic acid gas absorbent: to the weight (g) of nitrogen element in the total weight of the solid carbonic acid gas absorbent) is from 100 : 1 to 2 : 1. It is not possible to obtain sufficient carbonic acid gas absorption performance when the concentration of nitrogen atom is 0.1% by weight or less or the ratio of nitrogen element in the liquid carbonic acid gas absorbent to that in the solid carbonic acid gas absorbent is 100 : 1 or less. Meanwhile, it is not preferable that the concentration of nitrogen atom be 20% by weight or more or the ratio of nitrogen element in the liquid carbonic acid gas absorbent to that in the solid carbonic acid gas absorbent is 2 : 1 or more in terms of cost and the like since it is not possible to expect the improvement in carbonic acid gas absorption activating power by the solid carbonic acid gas absorbent with respect to the addition amount.

The concentration (weight percentage) of nitrogen atom in the total weight of the solid carbonic acid gas absorbent is determined by measuring the absorbent before absorbing the carbonic acid gas by using an elemental analysis method or a total nitrogen measuring device or a chemiluminescence nitrogen detector.

The weight (g) of nitrogen element in the total weight of the liquid carbonic acid gas absorbent is determined by measuring the absorbent before absorbing the carbonic acid gas by using the analytical method used for the quantitative and qualitative analysis of amine and described above.

The weight (g) of nitrogen element in the total weight of the solid carbonic acid gas absorbent is determined by measuring the absorbent before absorbing the carbonic acid gas by using an elemental analysis method.

(Recovery method of carbonic acid gas and recovery system of carbonic acid gas)

Next, the carbonic acid gas recovery method and the carbonic acid gas recovery system of embodiments will be described. The carbonic acid gas recovery method of embodiments is an example of implementation method using the carbonic acid gas absorbing material of embodiments. In addition, the carbonic acid gas recovery system of embodiments is an example of an apparatus for conducting the carbonic acid gas recovery method of embodiments.

The carbonic acid gas recovery system of embodiments includes an absorption tower which includes a carbonic acid gas absorbing material containing a liquid carbonic acid gas absorbent and a solid carbonic acid gas absorbent, to which a gas which contains a carbonic acid gas and is to be treated is introduced, and in which the carbonic acid gas is absorbed into the liquid carbonic acid gas absorbent and the solid carbonic acid gas absorbent and a regeneration tower which releases the carbonic acid gas from the liquid carbonic acid gas absorbent which has absorbed the carbonic acid gas by heating the liquid carbonic acid gas absorbent.

The carbonic acid gas recovery method of embodiments includes a step (first step) of introducing a gas which contains a carbonic acid gas and is to be treated into an absorption tower accommodating a carbonic acid gas absorbing material containing a liquid carbonic acid gas absorbent and a solid carbonic acid gas absorbent and absorbing the carbonic acid gas into the liquid carbonic acid gas absorbent and the solid carbonic acid gas absorbent, a step (second step) of transferring the liquid carbonic acid gas absorbent which has absorbed the carbonic acid gas to a regeneration tower, a step (third step) of heating the liquid carbonic acid gas absorbent which has absorbed the carbonic acid gas and has been transferred to the regeneration tower to release the carbonic acid gas, and a step (fourth step) of transferring the liquid carbonic acid gas absorbent which has released the carbonic acid gas to the absorption tower. Moreover, it is possible to repeatedly recover a carbonic acid gas by carrying out the first step after the fourth step. Incidentally, these steps can be continuously carried out.

When releasing the carbonic acid gas, the solid carbonic acid gas absorbent is not transferred to the regeneration tower since it is accommodated in the absorption tower. It is possible to greatly decrease the energy required for releasing and recovering the carbonic acid gas in the regeneration tower as the solid carbonic acid gas absorbent is held in the absorption tower and further the liquid carbonic acid gas absorbent and the solid carbonic acid gas absorbent of embodiments are used.

The absorption tower is a tower which absorbs a carbonic acid gas. The liquid carbonic acid gas absorbent and the solid carbonic acid gas absorbent are accommodated in the absorption tower. It is preferable that a mixture of the liquid carbonic acid gas absorbent and the solid carbonic acid gas absorbent be accommodated in the absorption tower. In the absorption tower, a step of introducing a gas which contains a carbonic acid gas and is to be treated into the absorption tower accommodating the carbonic acid gas absorbing material containing the liquid carbonic acid gas absorbent and the solid carbonic acid gas absorbent and absorbing the carbonic acid gas into the liquid carbonic acid gas absorbent and the solid carbonic acid gas absorbent is carried out. A gas which contains a carbonic acid gas and is to be treated is introduced into the absorption tower and the carbonic acid gas is absorbed into the liquid carbonic acid gas absorbent and the solid carbonic acid gas absorbent in the absorption tower. The absorption tower may also accommodate a filler including a resin or a metal, and the like as long as it accommodates the liquid carbonic acid gas absorbent and the solid carbonic acid gas absorbent. The solid carbonic acid gas absorbent remains in the absorption tower while the liquid carbonic acid gas absorbent circulates through the regeneration tower and the absorption tower. Hence, the solid carbonic acid gas absorbent is preferably accommodated or fixed in the absorption tower. In such a form, the solid carbonic acid gas absorbent is in contact with the liquid carbonic acid gas absorbent, and thus suitable absorption of carbonic acid gas takes place.

The contact of the liquid carbonic acid gas absorbent and the solid carbonic acid gas absorbent with the gas which contains a carbonic acid gas and is to be treated in the absorption tower is brought about by a method in which the gas is allowed to bubble in the liquid carbonic acid gas absorbent, a method (spraying or spraying method) in which the liquid carbonic acid gas absorbent is rained in a mist shape in the gas stream, a method in which a gas containing a carbonic acid gas is brought into countercurrent contact with the liquid carbonic acid gas absorbent in the tower, and the like, but the method is not limited to the above methods as long as the liquid carbonic acid gas absorbent and the solid carbonic acid gas absorbent can be brought into contact with the gas which contains a carbonic acid gas and is to be treated.

The temperature of the atmosphere for carbonic acid gas absorption reaction (the temperature of the liquid carbonic acid gas absorbent) in the absorption tower may be any temperature as long as the carbonic acid gas absorbing material is able to absorb a carbonic acid gas, but it is preferably 10°C or higher and 70°C or lower from the viewpoint of absorption efficiency. The reaction rate decreases at a low temperature and the absorption performance decreases at a high temperature. The temperature of the gas to be treated and the carbonic acid gas absorbing material may be adjusted if necessary so as to have this temperature. It is preferable to change the suitable temperature depending on the carbonic acid gas absorbing material to be used.

The regeneration tower is a tower which releases a carbonic acid gas from the liquid carbonic acid gas absorbent which has absorbed the carbonic acid gas. The carbonic acid gas is recovered by being released in the regeneration tower. A treatment to store, transport, or utilize the recovered carbonic acid gas may be carried out. A step to release the carbonic acid gas by heating the liquid carbonic acid gas absorbent which has absorbed the carbonic acid gas and has been transferred to the regeneration tower is carried out. The liquid carbonic acid gas absorbent which has been transferred to the regeneration tower is heated so as to release the carbonic acid gas.

The temperature when releasing the carbonic acid gas (the temperature of the liquid carbonic acid gas absorbent) in the regeneration tower may be any temperature as long as it is possible to release the carbonic acid gas, but it is preferably 70°C or higher and 150°C or lower from the viewpoint of the release efficiency. It is preferable to change the suitable temperature depending on the carbonic acid gas absorbing material to be used. In addition, it is also possible to concurrently use a vacuum operation or a membrane separation operation in addition to the heating operation at the time of releasing the carbonic acid gas.

The liquid carbonic acid gas absorbent that has released the carbonic acid gas in the regeneration tower is returned again to the absorption tower and used in the absorption of carbonic acid gas. This makes it possible to repeatedly conduct the absorption and release of carbonic acid gas with low energy.

### (Example 1)

A carbonic acid gas absorbing material containing a liquid carbonic acid gas absorbent containing a 50% by weight aqueous solution of isopropylaminoethanol (IPAE) and a solid carbonic acid gas absorbent containing a porous silica-supported amine which had an amine represented by -N (CH₂CH₂)₂NH as a terminal functional group, was supported on porous silica by using a silane coupling agent, and had an average particle size of 100 µm was used. The abundance ratio of the liquid carbonic acid gas absorbent and the solid carbonic acid gas absorbent was 5 : 1 in the nitrogen element ratio. A gas containing CO₂ gas at about 10% by volume was absorbed into the carbonic acid gas absorbing material for about 3 hours at and a flow rate of 0.5 L/min under the condition of atmospheric pressure at 40°C.

The amount of CO₂ absorbed into IPAE was analyzed by using pyrolysis gas chromatography and mass spectrometry or GC/TCD (Gas Chromatography/Thermal Conductivity Detector), and the result was 0.62 mol/mol. Thereafter, the liquid carbonic acid gas absorbent containing an IPAE aqueous solution was separated from the solid carbonic acid gas absorbent through filtration, only the liquid carbonic acid gas absorbent containing an IPAE aqueous solution was heated to 100°C, CO₂ was desorbed therefrom, the liquid carbonic acid gas absorbent was analyzed by using pyrolysis gas chromatography and mass spectrometry or GC/TCD (Gas Chromatography/Thermal Conductivity Detector), and the CO₂ remaining in the IPAE aqueous solution was 0.12 mol/mol. Namely, the CO₂ recovered was 0.50 mol/mol.

### (Example 2)

As a liquid carbonic acid gas absorbent, 50% by weight of N-methyldiethanolamine (MDEA) was used, and a solid carbonic acid gas absorbent containing a porous silica-supported amine which had an amine represented by -N(CH₂CH₂)₂NH as a terminal functional group, was supported on porous silica by using a silane coupling agent, and had an average particle size of 100 µm was used. The abundance ratio of the liquid carbonic acid gas absorbent and the solid carbonic acid gas absorbent was 5 : 1 in the nitrogen element ratio. The same CO₂ absorption and desorption experiment as in Example 1 was conducted. As a result, the amount of CO₂ absorbed was 0.64 mol/mol, and the residual CO₂ after the CO₂ desorption at 100°C was 0.13 mol/mol, that is, the CO₂ recovered was 0.51 mol/mol.

### (Example 3)

As a liquid carbonic acid gas absorbent, 50% by weight of triethanolamine (TEA) was used, and a solid carbonic acid gas absorbent containing a porous silica-supported amine which had an amine represented by -N(CH₂CH₂)₂NH as a terminal functional group, was supported on porous silica by using a silane coupling agent, and had an average particle size of 100 µm was used. The abundance ratio of the liquid carbonic acid gas absorbent and the solid carbonic acid gas absorbent was 5 : 1 in the nitrogen element ratio. The same CO₂ absorption and desorption experiment as in Example 1 was conducted. As a result, the amount of CO₂ absorbed was 0.52 mol/mol, and the residual CO₂ after the CO₂ desorption at 100°C was 0.12 mol/mol, that is, the CO₂ recovered was 0.40 mol/mol.

### (Example 4)

As a liquid carbonic acid gas absorbent, 50% by weight of dimethylaminoethanol (DMAE) was used, and a solid carbonic acid gas absorbent containing a porous silica-supported amine which had an amine represented by -N(CH₂CH₂)₂NH as a terminal functional group, was supported on porous silica by using a silane coupling agent, and had an average particle size of 100 µm was used. The abundance ratio of the liquid carbonic acid gas absorbent and the solid carbonic acid gas absorbent was 5 : 1 in the nitrogen element ratio. The same CO₂ absorption and desorption experiment as in Example 1 was conducted. As a result, the amount of CO₂ absorbed was 0.60 mol/mol, and the residual CO₂ after the CO₂ desorption at 100°C was 0.13 mol/mol, that is, the CO₂ recovered was 0.47 mol/mol.

### (Example 5)

As a liquid carbonic acid gas absorbent, 50% by weight of diethylaminoethanol (DEAE) was used, and a solid carbonic acid gas absorbent containing a porous silica-supported amine which had an amine represented by -N(CH₂CH₂)₂NH as a terminal functional group, was supported on porous silica by using a silane coupling agent, and had an average particle size of 100 µm was used. The abundance ratio of the liquid carbonic acid gas absorbent and the solid carbonic acid gas absorbent was 5 : 1 in the nitrogen element ratio. The same CO₂ absorption and desorption experiment as in Example 1 was conducted. As a result, the amount of CO₂ absorbed was 0.61 mol/mol, and the residual CO₂ after the CO₂ desorption at 100°C was 0.11 mol/mol, that is, the CO₂ recovered was 0.50 mol/mol.

### (Example 6)

As a liquid carbonic acid gas absorbent, 50% by weight of cyclohexylaminoethanol was used, and a solid carbonic acid gas absorbent containing a porous silica-supported amine which had an amine represented by -N(CH₂CH₂)₂NH as a terminal functional group, was supported on porous silica by using a silane coupling agent, and had an average particle size of 100 µm was used. The abundance ratio of the liquid carbonic acid gas absorbent and the solid carbonic acid gas absorbent was 5 : 1 in the nitrogen element ratio. The same CO₂ absorption and desorption experiment as in Example 1 was conducted. As a result, the amount of CO₂ absorbed was 0.64 mol/mol, and the residual CO₂ after the CO₂ desorption at 100°C was 0.13 mol/mol, that is, the CO₂ recovered was 0.51 mol/mol.

### (Example 7)

As a liquid carbonic acid gas absorbent, 50% by weight of N-methylcyclohexylaminoethanol was used, and a solid carbonic acid gas absorbent containing a porous silica-supported amine which had an amine represented by -N(CH₂CH₂)₂NH as a terminal functional group, was supported on porous silica by using a silane coupling agent, and had an average particle size of 100 µm was used. The abundance ratio of the liquid carbonic acid gas absorbent and the solid carbonic acid gas absorbent was 5 : 1 in the nitrogen element ratio. The same CO₂ absorption and desorption experiment as in Example 1 was conducted. As a result, the amount of CO₂ absorbed was 0. 60 mol/mol, and the residual CO₂ after the CO₂ desorption at 100°C was 0.11 mol/mol, that is, the CO₂ recovered was 0.49 mol/mol.

### (Example 8)

As a liquid carbonic acid gas absorbent, 50% by weight of cyclopentylaminoethanolwas used, and a solid carbonic acid gas absorbent containing a porous silica-supported amine which had an amine represented by -N(CH₂CH₂)₂NH as a terminal functional group, was supported on porous silica by using a silane coupling agent, and had an average particle size of 100 µm was used. The abundance ratio of the liquid carbonic acid gas absorbent and the solid carbonic acid gas absorbent was 5 : 1 in the nitrogen element ratio. The same CO₂ absorption and desorption experiment as in Example 1 was conducted. As a result, the amount of CO₂ absorbed was 0.62 mol/mol, and the residual CO₂ after the CO₂ desorption at 100°C was 0.12 mol/mol, that is, the CO₂ recovered was 0.50 mol/mol.

### (Example 9)

As a liquid carbonic acid gas absorbent, 50% by weight of monoethanolamine (MEA) was used, and a solid carbonic acid gas absorbent containing a porous silica-supported amine which had an amine represented by -N(CH₂CH₂)₂NH as a terminal functional group, was supported on porous silica by using a silane coupling agent, and had an average particle size of 100 µm was used. The abundance ratio of the liquid carbonic acid gas absorbent and the solid carbonic acid gas absorbent was 5 : 1 in the nitrogen element ratio. The same CO₂ absorption and desorption experiment as in Example 1 was conducted. As a result, the amount of CO₂ absorbed was 0.65 mol/mol, and the residual CO₂ after the CO₂ desorption at 100°C was 0.30 mol/mol, that is, the CO₂ recovered was 0.35 mol/mol.

### (Example 10)

As a liquid carbonic acid gas absorbent, 50% by weight of diethanolamine (DEA) was used, and a solid carbonic acid gas absorbent containing a porous silica-supported amine which had an amine represented by -N(CH₂CH₂)₂NH as a terminal functional group, was supported on porous silica by using a silane coupling agent, and had an average particle size of 100 µm was used. The abundance ratio of the liquid carbonic acid gas absorbent and the solid carbonic acid gas absorbent was 5 : 1 in the nitrogen element ratio. The same CO₂ absorption and desorption experiment as in Example 1 was conducted. As a result, the amount of CO₂ absorbed was 0.62 mol/mol, and the residual CO₂ after the CO₂ desorption at 100°C was 0.25 mol/mol, that is, the CO₂ recovered was 0.37 mol/mol.

### (Example 11)

As a liquid carbonic acid gas absorbent, 50% by weight of diethanolamine (DEA) was used, and a silica-supported amine having an amine represented by -NH-CH₂CH₂NH₂ as a terminal functional group was used as a solid carbonic acid gas absorbent. The abundance ratio of the liquid carbonic acid gas absorbent and the solid carbonic acid gas absorbent was 5 : 1 in the nitrogen element ratio. The same CO₂ absorption and desorption experiment as in Example 1 was conducted. As a result, the amount of CO₂ absorbed was 0.59 mol/mol, and the residual CO₂ after the CO₂ desorption at 100°C was 0.23 mol/mol, that is, the CO₂ recovered was 0.36 mol/mol.

### (Example 12)

As a liquid carbonic acid gas absorbent, 50% by weight of isopropylaminoethanol (IPAE) was used, and a silica-supported amine having an amine represented by-NH-CH₂CH₂NH₂ as a terminal functional group was used as a solid carbonic acid gas absorbent. The abundance ratio of the liquid carbonic acid gas absorbent and the solid carbonic acid gas absorbent was 5 : 1 in the nitrogen element ratio. The same CO₂ absorption and desorption experiment as in Example 1 was conducted. As a result, the amount of CO₂ absorbed was 0.63 mol/mol, and the residual CO₂ after the CO₂ desorption at 100°C was 0.13 mol/mol, that is, the CO₂ recovered was 0.50 mol/mol.

### (Example 13)

As a liquid carbonic acid gas absorbent, 50% by weight of N-methyldiethanolamine (MDEA) was used, and a silica-supported amine having an amine represented by-NH-CH₂CH₂NH₂ as a terminal functional group was used as a solid carbonic acid gas absorbent. The abundance ratio of the liquid carbonic acid gas absorbent and the solid carbonic acid gas absorbent was 5 : 1 in the nitrogen element ratio. The same CO₂ absorption and desorption experiment as in Example 1 was conducted. As a result, the amount of CO₂ absorbed was 0.62 mol/mol, and the residual CO₂ after the CO₂ desorption at 100°C was 0.12 mol/mol, that is, the CO₂ recovered was 0.50 mol/mol.

### (Example 14)

As a liquid carbonic acid gas absorbent, 50% by weight of triethanolamine (TEA) was used, and a silica-supported amine having an amine represented by -NH-CH₂CH₂NH₂ as a terminal functional group was used as a solid carbonic acid gas absorbent. The abundance ratio of the liquid carbonic acid gas absorbent and the solid carbonic acid gas absorbent was 5 : 1 in the nitrogen element ratio. The same CO₂ absorption and desorption experiment as in Example 1 was conducted. As a result, the amount of CO₂ absorbed was 0.58 mol/mol, and the residual CO₂ after the CO₂ desorption at 100°C was 0.12 mol/mol, that is, the CO₂ recovered was 0.46 mol/mol.

### (Example 15)

As a liquid carbonic acid gas absorbent, 50% by weight of cyclohexylaminoethanol was used, and a silica-supported amine having an amine represented by -NH-CH₂CH₂NH₂ as a terminal functional group was used as a solid carbonic acid gas absorbent. The abundance ratio of the liquid carbonic acid gas absorbent and the solid carbonic acid gas absorbent was 5 : 1 in the nitrogen element ratio. The same CO₂ absorption and desorption experiment as in Example 1 was conducted. As a result, the amount of CO₂ absorbed was 0.62 mol/mol, and the residual CO₂ after the CO₂ desorption at 100°C was 0.11 mol/mol, that is, the CO₂ recovered was 0.51 mol/mol.

### (Example 16)

As a liquid carbonic acid gas absorbent, 50% by weight of N-methylcyclohexylaminoethanol was used, and a silica-supported amine having an amine represented by-NH-CH₂CH₂NH₂ as a terminal functional group was used as a solid carbonic acid gas absorbent. The abundance ratio of the liquid carbonic acid gas absorbent and the solid carbonic acid gas absorbent was 5 : 1 in the nitrogen element ratio. The same CO₂ absorption and desorption experiment as in Example 1 was conducted. As a result, the amount of CO₂ absorbed was 0.57 mol/mol, and the residual CO₂ after the CO₂ desorption at 100°C was 0.11 mol/mol, that is, the CO₂ recovered was 0.46 mol/mol.

### (Example 17)

As a liquid carbonic acid gas absorbent, 50% by weight of cyclopentylaminoethanol was used, and a silica-supported amine having an amine represented by -NH-CH₂CH₂NH₂ as a terminal functional group was used as a solid carbonic acid gas absorbent. The abundance ratio of the liquid carbonic acid gas absorbent and the solid carbonic acid gas absorbent was 5 : 1 in the nitrogen element ratio. The same CO₂ absorption and desorption experiment as in Example 1 was conducted. As a result, the amount of CO₂ absorbed was 0.61 mol/mol, and the residual CO₂ after the CO₂ desorption at 100°C was 0.13 mol/mol, that is, the CO₂ recovered was 0.48 mol/mol.

### (Example 18)

As a liquid carbonic acid gas absorbent, 50% by weight of isopropylaminoethanol (IPAE) was used, and a silica-supported amine having an amine represented by -N (CH₂CH₂NH₂)₂ as a terminal functional group was used as a solid carbonic acid gas absorbent. The abundance ratio of the liquid carbonic acid gas absorbent and the solid carbonic acid gas absorbent was 5 : 1 in the nitrogen element ratio. The same CO₂ absorption and desorption experiment as in Example 1 was conducted. As a result, the amount of CO₂ absorbed was 0.63 mol/mol, and the residual CO₂ after the CO₂ desorption at 100°C was 0.14 mol/mol, that is, the CO₂ recovered was 0.49 mol/mol.

### (Example 19)

As a liquid carbonic acid gas absorbent, 50% by weight of N-methyldiethanolamine (MDEA) was used, and a silica-supported amine having an amine represented by -N (CH₂CH₂NH₂)₂ as a terminal functional group was used as a solid carbonic acid gas absorbent. The abundance ratio of the liquid carbonic acid gas absorbent and the solid carbonic acid gas absorbent was 5 : 1 in the nitrogen element ratio. The same CO₂ absorption and desorption experiment as in Example 1 was conducted. As a result, the amount of CO₂ absorbed was 0.61 mol/mol, and the residual CO₂ after the CO₂ desorption at 100°C was 0.13 mol/mol, that is, the CO₂ recovered was 0.48 mol/mol.

### (Example 20)

As a liquid carbonic acid gas absorbent, 50% by weight of triethanolamine (TEA) was used, and a silica-supported amine having an amine represented by -N(CH₂CH₂NH₂)₂ as a terminal functional group was used as a solid carbonic acid gas absorbent. The abundance ratio of the liquid carbonic acid gas absorbent and the solid carbonic acid gas absorbent was 5 : 1 in the nitrogen element ratio. The same CO₂ absorption and desorption experiment as in Example 1 was conducted. As a result, the amount of CO₂ absorbed was 0.57 mol/mol, and the residual CO₂ after the CO₂ desorption at 100°C was 0.11 mol/mol, that is, the CO₂ recovered was 0.46 mol/mol.

### (Example 21)

As a liquid carbonic acid gas absorbent, 50% by weight of cyclohexylaminoethanol was used, and a silica-supported amine having an amine represented by -N (CH₂CH₂NH₂)₂ as a terminal functional group was used as a solid carbonic acid gas absorbent. The abundance ratio of the liquid carbonic acid gas absorbent and the solid carbonic acid gas absorbent was 5 : 1 in the nitrogen element ratio. The same CO₂ absorption and desorption experiment as in Example 1 was conducted. As a result, the amount of CO₂ absorbed was 0.63 mol/mol, and the residual CO₂ after the CO₂ desorption at 100°C was 0.13 mol/mol, that is, the CO₂ recovered was 0.50 mol/mol.

### (Example 22)

A carbonic acid gas absorbing material containing a liquid carbonic acid gas absorbent containing a 50% by weight aqueous solution of isopropylaminoethanol (IPAE) and a solid carbonic acid gas absorbent containing a porous polystyrene resin-supported amine having an amine represented by -N(CH₂CH₂NH₂)₂ as a terminal functional group was used. The abundance ratio of the liquid carbonic acid gas absorbent and the solid carbonic acid gas absorbent was 5 : 1 in the nitrogen element ratio. The same CO₂ absorption and desorption experiment as in Example 1 was conducted. The amount of CO₂ absorbed into IPAE was 0. 63 mol/mol. Thereafter, only the IPAE aqueous solution was heated to 100°C, CO₂ was desorbed therefrom, and as a result, the CO₂ remaining in the IPAE aqueous solution was 0.12 mol/mol. Namely, the CO₂ recovered was 0.51 mol/mol.

### (Example 23)

A carbonic acid gas absorbing material containing a liquid carbonic acid gas absorbent containing a 50% by weight aqueous solution of isopropylaminoethanol (IPAE) and a solid carbonic acid gas absorbent containing a stainless-supported amine having an amine represented by -N (CH₂CH₂NH₂)₂ as a terminal functional group was used. The abundance ratio of the liquid carbonic acid gas absorbent and the solid carbonic acid gas absorbent was 5 : 1 in the nitrogen element ratio. The same CO₂ absorption and desorption experiment as in Example 1 was conducted. The amount of CO₂ absorbed into IPAE was 0.61 mol/mol. Thereafter, only the IPAE aqueous solution was heated to 100°C, CO₂ was desorbed therefrom, and as a result, the CO₂ remaining in the IPAE aqueous solution was 0.11 mol/mol. Namely, the CO₂ recovered was 0.50 mol/mol.

### (Example 24)

As a liquid carbonic acid gas absorbent, 50% by weight of isopropylaminoethanol (IPAE) was used, and a silica-supported having an amine represented by -N(CH₂CH₂NH₂)₂ as a terminal functional group was used as a solid carbonic acid gas absorbent. The abundance ratio of the liquid carbonic acid gas absorbent and the solid carbonic acid gas absorbent was 10 : 1 in the nitrogen element ratio. The same CO₂ absorption and desorption experiment as in Example 1 was conducted. As a result, the amount of CO₂ absorbed was 0.58 mol/mol, and the residual CO₂ after the CO₂ desorption at 100°C was 0.11 mol/mol, that is, the CO₂ recovered was 0.47 mol/mol.

### (Example 25)

As a liquid carbonic acid gas absorbent, 50% by weight of isopropylaminoethanol (IPAE) was used, and a silica-supported having an amine represented by -N(CH₂CH₂NH₂)₂ as a terminal functional group was used as a solid carbonic acid gas absorbent. The abundance ratio of the liquid carbonic acid gas absorbent and the solid carbonic acid gas absorbent was 3 : 1 in the nitrogen element ratio. The same CO₂ absorption and desorption experiment as in Example 1 was conducted. As a result, the amount of CO₂ absorbed was 0.68 mol/mol, and the residual CO₂ after the CO₂ desorption at 100°C was 0.11 mol/mol, that is, the CO₂ recovered was 0.57 mol/mol.

### (Comparative Example 1)

A liquid carbonic acid gas absorbent containing a 50% by weight aqueous solution of isopropylaminoethanol (IPAE) was only used. The same CO₂ absorption and desorption experiment as in Example 1 was conducted. The amount of CO₂ absorbed into IPAE was 0.40 mol/mol. Thereafter, the IPAE aqueous solution was heated to 100°C, CO₂ was desorbed therefrom, and as a result, the CO₂ remaining in the IPAE aqueous solution was 0.11 mol/mol. Namely, the CO₂ recovered was 0.29 mol/mol.

### (Comparative Example 2)

A liquid carbonic acid gas absorbent containing a 50% by weight aqueous solution of N-methyldiethanolamine (MDEA) was only used. The same CO₂ absorption and desorption experiment as in Example 1 was conducted. As a result, the amount of CO₂ absorbed was 0.41 mol/mol, and the residual CO₂ after the CO₂ desorption at 100°C was 0.11 mol/mol, that is, the CO₂ recovered was 0.30 mol/mol.

### (Comparative Example 3)

A liquid carbonic acid gas absorbent containing an aqueous solution of 50% by weight of isopropylaminoethanol (IPAE) and 5% by weight piperazine was only used. The same CO₂ absorption and desorption experiment as in Example 1 was conducted. As a result, the amount of CO₂ absorbed was 0.65 mol/mol, and the residual CO₂ after the CO₂ desorption at 100°C was 0.30 mol/mol, that is, the CO₂ recovered was 0.35 mol/mol.

### (Comparative Example 4)

A carbonic acid gas absorbing material containing a liquid carbonic acid gas absorbent containing a 50% by weight aqueous solution of isopropylaminoethanol (IPAE) and a solid carbonic acid gas absorbent containing a porous silica-supported amine having an amine represented by -N(CH₂CH₂NH₂)₂ as a terminal functional group was used. The abundance ratio of the liquid carbonic acid gas absorbent and the solid carbonic acid gas absorbent was 100 : 1 in the nitrogen element ratio. The same CO₂ absorption and desorption experiment as in Example 1 was conducted. As a result, the amount of CO₂ absorbed was 0.40 mol/mol, and the residual CO₂ after the CO₂ desorption at 100°C was 0.11 mol/mol, that is, the CO₂ recovered was 0.29 mol/mol.

### (Comparative Example 5)

A carbonic acid gas absorbing material containing a liquid carbonic acid gas absorbent containing a 50% by weight aqueous solution of isopropylaminoethanol (IPAE) and a solid carbonic acid gas absorbent containing a porous silica-supported amine having an amine represented by -N (CH₂CH₃)₂ as a terminal functional group was used. The abundance ratio of the liquid carbonic acid gas absorbent and the solid carbonic acid gas absorbent was 5 : 1 in the nitrogen element ratio. The same CO₂ absorption and desorption experiment as in Example 1 was conducted. As a result, the amount of CO₂ absorbed was 0.48 mol/mol, and the residual CO₂ after the CO₂ desorption at 100°C was 0.12 mol/mol, that is, the CO₂ recovered was 0.36 mol/mol.

### (Example 26)

As a liquid carbonic acid gas absorbent, 45% by weight of N-methyldiethanolamine (MDEA) was used, and a polystyrene-supported amine having an amine represented by -CH₂CH₂NH₂ as a terminal functional group was used as a solid carbonic acid gas absorbent. The same CO₂ absorption and desorption experiment as in Example 1 was conducted. In addition, the same CO₂ absorption and desorption experiment as in Example 1 was conducted under a condition that a solid carbonic acid gas absorbent was not used as a comparative example. As a result, the CO₂ recovered was more by 0. 11 mol/mol in Example 26 than in the comparative example.

In the specification, some elements are represented only by the symbols for the elements.

### Clauses

1. A carbonic acid gas absorbing material comprising:
   a liquid carbonic acid gas absorbent; and
   a solid carbonic acid gas absorbent, wherein
   the liquid carbonic acid gas absorbent is a solution containing a first amine and a solvent, and
   the solid carbonic acid gas absorbent is a second amine of any one among a polyamine, a base material and an amine fixed to the base material, or a polyamine, a base material, and an amine fixed to the base material.
2. The material according to clause 1, wherein
   the first amine contains at least one amine selected from the group consisting of; a primary amine, a secondary amine, and a tertiary amine, and
   the second amine contains a primary amine, a secondary amine, or a primary amine and a secondary amine.
3. The material according to clause 1 or 2, wherein
   the primary amine, the secondary amine, or the primary amine and the secondary amine of the first amine is a hindered amine.
4. The material according to any one of the preceding clauses, wherein the second amine has a primary heterocyclic amine structure or secondary heterocyclic amine structure.
5. The material according to any one of the preceding clauses, wherein the at least one amine selected from the group consisting of; the primary amine, the secondary amine, and the tertiary amine in the first amine has plural kinds of amine structures.
6. The material according to any one of the preceding clauses, wherein at least either amine of the primary amine or the secondary amine in the second amine has plural kinds of amine structures.
7. The material according to any one of the preceding clauses, wherein a terminal of a main chain of the second amine is a primary amine.
8. The material according to any one of the preceding claims, wherein
   the first amine is represented by a general formula R1R2-N-R3, wherein
   R1, R2, and R3 are all bonded to a nitrogen atom,
   R1 is represented by Cₛ₁Hₜ₁Oᵤ₁Nᵥ₁, wherein s1, t1, u1, and v1 respectively satisfy 0 ≤ s1 ≤ 20, 1 ≤ t1 ≤ 50, 0 ≤ u1 ≤ 10, and 0 ≤ v1 ≤ 5,
   R2 is represented by Cₛ₂Hₜ₂Oᵤ₂Nᵥ₂, wherein s2, t2, u2, and v2 respectively satisfy 0 ≤ s2 ≤ 20, 1 ≤ t2 ≤ 50, 0 ≤ u2 ≤ 10, and 0 ≤ v2 ≤ 5, and
   R3 is hydrogen or a functional group represented by Cₛ₃Hₜ₃Oᵤ₃Nᵥ₃, wherein s3, t3, u3, and v3 respectively satisfy 1 ≤ s3 ≤ 20, 1 ≤ t3 ≤ 50, 0 ≤ u3 ≤ 10, and 0 ≤ v3 ≤ 5.
9. The material according to any one of the preceding clauses, wherein
   a partial structure of the second amine is represented by a chemical formula R4-NH-R5, wherein
   R4 and R5 are bonded to a nitrogen atom,
   R4 is hydrogen or a functional group represented by Cₛ₄Hₜ₄Oᵤ₄Nᵥ₄, wherein s4, t4, u4, and v4 respectively satisfy 0 ≤ s4 ≤ 20, 1 ≤ t4 ≤ 50, 0 ≤ u4 ≤ 10, and 0 ≤ v4 ≤ 5, and
   R5 is represented by Cₛ₅Hₜ₅Oᵤ₅Nᵥ₅, wherein s5, t5, u5, and v5 respectively satisfy 1 ≤ s5 ≤ 20, 1 ≤ t5 ≤ 50, 0 ≤ u5 ≤ 10, and 0 ≤ v5 ≤ 5.
10. The material according to any one of the preceding clauses, wherein the second amine has a dendrimer structure satisfying a general formula (1), and in the following formula (1), x is 1 or more and 5 or less and y is 1 or more and 10 or less. 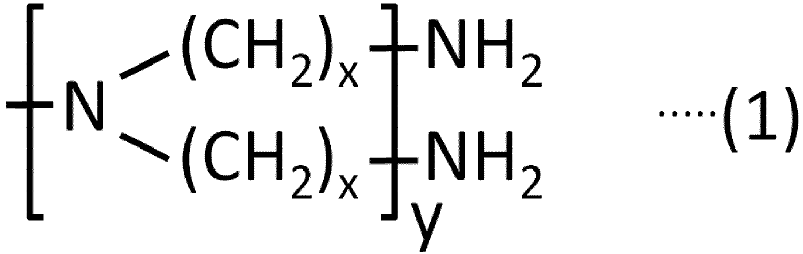
11. The material according to any one of the preceding clauses, wherein a total amount of amine contained in the liquid carbonic acid gas absorbent is 20% by weight or more and 80% by weight or less.
12. The material according to any one of the preceding clause, wherein
   a concentration of nitrogen atom in a total weight of the solid carbonic acid gas absorbent is 0.1% by weight or more and 20% by weight or less, and
   a ratio of a weight of a nitrogen element in a total weight of the liquid carbonic acid gas absorbent to a weight of a nitrogen element in a total weight of the solid carbonic acid gas absorbent is from 100 : 1 to 2 : 1.
13. A carbonic acid gas recovery system comprising:
   an absorption tower including a carbonic acid gas absorbing material containing a liquid carbonic acid gas absorbent and a solid carbonic acid gas absorbent, to have a gas which contains a carbonic acid gas and is to be treated to be introduced, and to absorb the carbonic acid gas into the liquid carbonic acid gas absorbent and the solid carbonic acid gas absorbent; and
   a regeneration tower releasing the carbonic acid gas from the liquid carbonic acid gas absorbent which has absorbed the carbonic acid gas by heating the liquid carbonic acid gas absorbent, wherein
   the carbonic acid gas absorbing material is the carbonic acid gas absorbing material according to any one of the preceding clauses.
14. A carbonic acid gas recovery method comprising:
   introducing a gas which contains a carbonic acid gas and is to be treated to an absorption tower accommodating a carbonic acid gas absorbing material containing a liquid carbonic acid gas absorbent and a solid carbonic acid gas absorbent and absorbing the carbonic acid gas into the liquid carbonic acid gas absorbent and the solid carbonic acid gas absorbent;
   transferring the liquid carbonic acid gas absorbent which has absorbed the carbonic acid gas to a regeneration tower;
   heating the liquid carbonic acid gas absorbent which has absorbed the carbonic acid gas and has been transferred to the regeneration tower to release the carbonic acid gas; and
   transferring the liquid carbonic acid gas absorbent which has released the carbonic acid gas to the absorption tower, wherein
   the carbonic acid gas absorbing material is the carbonic acid gas absorbing material according to any one of clauses 1 to 12.

While certain arrangements have been described, these arrangements have been presented by way of example only, and are not intended to limit the scope of the claims. Indeed, the carbonic acid gas absorbing material, the carbonic acid gas recovery system, and the carbonic acid gas recovery method described herein may be embodied in a variety of other forms; furthermore various omissions, substitutions and changes in the form of the carbonic acid gas absorbing material, the carbonic acid gas recovery system, and the carbonic acid gas recovery method described herein may be made.

## Claims

1. A carbonic acid gas absorbing material comprising:
a liquid carbonic acid gas absorbent; and
a solid carbonic acid gas absorbent, wherein
the liquid carbonic acid gas absorbent is a solution containing a first amine and a solvent, and
the solid carbonic acid gas absorbent is a second amine of any one among a polyamine, a base material and an amine fixed to the base material, or a polyamine, a base material, and an amine fixed to the base material.

2. The material according to claim 1, wherein
the first amine contains at least one amine selected from the group consisting of; a primary amine, a secondary amine, and a tertiary amine, and
the second amine contains a primary amine, a secondary amine, or a primary amine and a secondary amine.

3. The material according to claim 1 or 2, wherein
the primary amine, the secondary amine, or the primary amine and the secondary amine of the first amine is a hindered amine.

4. The material according to any one of the preceding claims, wherein the second amine has a primary heterocyclic amine structure or secondary heterocyclic amine structure.

5. The material according to any one of the preceding claims, wherein the at least one amine selected from the group consisting of; the primary amine, the secondary amine, and the tertiary amine in the first amine has plural kinds of amine structures.

6. The material according to any one of the preceding claims, wherein at least either amine of the primary amine or the secondary amine in the second amine has plural kinds of amine structures.

7. The material according to any one of the preceding claims, wherein a terminal of a main chain of the second amine is a primary amine.

8. The material according to any one of the preceding claims, wherein
the first amine is represented by a general formula R1R2-N-R3, wherein
R1, R2, and R3 are all bonded to a nitrogen atom,
R1 is represented by Cₛ₁Hₜ₁Oᵤ₁Nᵥ₁, wherein s1, t1, u1, and v1 respectively satisfy 0 ≤ s1 ≤ 20, 1 ≤ t1 ≤ 50, 0 ≤ u1 ≤ 10, and 0 ≤ v1 ≤ 5,
R2 is represented by Cₛ₂Hₜ₂Oᵤ₂Nᵥ₂, wherein s2, t2, u2, and v2 respectively satisfy 0 ≤ s2 ≤ 20, 1 ≤ t2 ≤ 50, 0 ≤ u2 ≤ 10, and 0 ≤ v2 ≤ 5, and
R3 is hydrogen or a functional group represented by Cₛ₃Hₜ₃Oᵤ₃Nᵥ₃, wherein s3, t3, u3, and v3 respectively satisfy 1 ≤ s3 ≤ 20, 1 ≤ t3 ≤ 50, 0 ≤ u3 ≤ 10, and 0 ≤ v3 ≤ 5.

9. The material according to any one of the preceding claims, wherein
a partial structure of the second amine is represented by a chemical formula R4-NH-R5, wherein
R4 and R5 are bonded to a nitrogen atom,
R4 is hydrogen or a functional group represented by Cₛ₄Hₜ₄Oᵤ₄Nᵥ₄, wherein s4, t4, u4, and v4 respectively satisfy 0 ≤ s4 ≤ 20, 1 ≤ t4 ≤ 50, 0 ≤ u4 ≤ 10, and 0 ≤ v4 ≤ 5, and
R5 is represented by Cₛ₅Hₜ₅Oᵤ₅Nᵥ₅, wherein s5, t5, u5, and v5 respectively satisfy 1 ≤ s5 ≤ 20, 1 ≤ t5 ≤ 50, 0 ≤ u5 ≤ 10, and 0 ≤ v5 ≤ 5.

10. The material according to any one of the preceding claims, wherein the second amine has a dendrimer structure satisfying a general formula (1), and in the following formula (1), x is 1 or more and 5 or less and y is 1 or more and 10 or less.

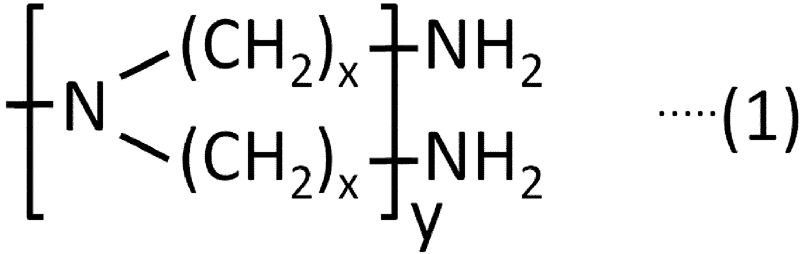

11. The material according to any one of the preceding claims, wherein a total amount of amine contained in the liquid carbonic acid gas absorbent is 20% by weight or more and 80% by weight or less.

12. The material according to any one of the preceding claims, wherein
a concentration of nitrogen atom in a total weight of the solid carbonic acid gas absorbent is 0.1% by weight or more and 20% by weight or less, and
a ratio of a weight of a nitrogen element in a total weight of the liquid carbonic acid gas absorbent to a weight of a nitrogen element in a total weight of the solid carbonic acid gas absorbent is from 100 : 1 to 2 : 1.

13. A carbonic acid gas recovery system comprising:
an absorption tower including a carbonic acid gas absorbing material containing a liquid carbonic acid gas absorbent and a solid carbonic acid gas absorbent, to have a gas which contains a carbonic acid gas and is to be treated to be introduced, and to absorb the carbonic acid gas into the liquid carbonic acid gas absorbent and the solid carbonic acid gas absorbent; and
a regeneration tower releasing the carbonic acid gas from the liquid carbonic acid gas absorbent which has absorbed the carbonic acid gas by heating the liquid carbonic acid gas absorbent, wherein
the carbonic acid gas absorbing material is the carbonic acid gas absorbing material according to any one of the preceding claims.

14. A carbonic acid gas recovery method comprising:
introducing a gas which contains a carbonic acid gas and is to be treated to an absorption tower accommodating a carbonic acid gas absorbing material containing a liquid carbonic acid gas absorbent and a solid carbonic acid gas absorbent and absorbing the carbonic acid gas into the liquid carbonic acid gas absorbent and the solid carbonic acid gas absorbent;
transferring the liquid carbonic acid gas absorbent which has absorbed the carbonic acid gas to a regeneration tower;
heating the liquid carbonic acid gas absorbent which has absorbed the carbonic acid gas and has been transferred to the regeneration tower to release the carbonic acid gas; and
transferring the liquid carbonic acid gas absorbent which has released the carbonic acid gas to the absorption tower, wherein
the carbonic acid gas absorbing material is the carbonic acid gas absorbing material according to any one of claims 1 to 12.
